# EUROPEAN PATENT APPLICATION

(11) **EP 2 392 401 A1**
(43) Date of publication of application: **07.12.2011**
(21) Application number: 10735907.7
(22) Date of filing: 29.01.2010
(51) Int. Cl.: B01J 35/02, B01J 23/26, B01J 23/42, B01J 23/755, B01J 37/34, C01B 3/04

(54) **TiO2 NANOPARTICLES**

(30) Priority: 02.02.2009 JP 2009021457
(71) Applicant: Pioneer Corporation, Kanagawa 212-0031 (JP); National Institute for Materials Science, Tsukuba-shi, Ibaraki 305-0047 (JP)
(72) Inventor: OKUYAMA, Hideo, Tsukuba-shi Ibaraki 305-0047 (JP); SAKKA, Yoshio, Tsukuba-shi Ibaraki 305-0047 (JP); SHIDA, Noriyoshi, Tsurugashima-shi Saitama 350-2288 (JP); UDA, Masahiro, Tsurugashima-shi Saitama 350-2288 (JP); WATANABE, Atsushi, Tsurugashima-shi Saitama 350-2288 (JP); YOSHIKAWA, Takamasa, Tsurugashima-shi Saitama 350-2288 (JP)
(74) Representative: Manitz, Gerhart
(86) International application number: PCT/JP2010/051256
(87) International publication number: WO 2010/087445

(57) **Abstract**

Disclosed is a TiO₂ nano particle exhibiting a strongly activated catalyst function. The TiO₂ nano particle is created by a step of mixing Ti powder and metal powder M (M is Ni, Cr, Pt, Rh, Ru or Cu), a step of generating heat plasma, and a step of supplying a mixture of the titanium powder and the metal powder to the heat plasma using an inert gas as a carrier gas and supplying oxygen gas to the heat plasma. The created TiO₂ nano particle is injected with a metal and/or a metal oxide MxOy (M is Ni, Cr, Pt, Rh, Ru or Cu, x = 1, 2, 3 ... and y = 0, 1, 2 ...), thereby exhibiting high photocatalytic activity.

## Description

### TECHNICAL FIELD

The present invention relates to a TiO₂ nano particle that decomposes water through light irradiation to generate hydrogen, thereby exhibiting photocatalytic activity.

### RELATED ART

Titanium dioxide (TiO₂) exhibits ultraviolet absorption properties due to the wide band gap and high adsorptivity thereof through separation of oxygen from the surface thereof, and therefore, titanium dioxide is widely used in various fields, including the field of catalysts. Transfer of electrons and/or holes caused by photocatalytic reaction occurs at the surface of TiO₂. Preferably, therefore, TiO₂ powder is manufactured to increase surface area so that photocatalytic reaction efficiency is improved.

On the other hand, since most solar light reaching the surface of the earth is within the visible spectrum, attempts have been made at doping TiO₂ with, for example, a dopant so that a dopant level is formed in a band gap to dopant-doped titanium dioxide exhibiting photocatalytic activity even in the visible light range.

Currently, several dozen forms of TiO₂ powder are on the market. These TiO₂ powder products have different particle purities, specific surface areas (particle diameters), crystal forms or the like depending upon manufacturing methods thereof. Liquid phase and vapor phase methods are generally used to manufacture such TiO₂ powder products.

Also, in recent years, an attempt has been made at supplying Ti powder or a solution containing Ti and oxygen gas as a reaction gas to high frequency plasma flame (about 10000 K) so that the Ti powder or the solution containing Ti and the oxygen gas react to manufacture TiO₂ nano particles. Hereinafter, a conventional method using high frequency plasma will be described.

Patent document 1 discloses a method of manufacturing a TiO₂ particle using high frequency plasma. In the disclosure of patent literature 1, a starting raw material to manufacture the TiO₂ nano particle is a compound solution obtained by mixing liquid titanium trichloride, ammonium persulfate as an oxidizing agent and ammonium hydroxide as a pH adjusting agent. A solution containing a nitrogen element and a carbon element, which are unnecessary for original synthesis, is mixed in the compound solution. If the compound solution is supplied to heat plasma, therefore, the nitrogen element and the carbon element also react with the result that the nitrogen element and the carbon element infiltrate the TiO₂ particle or replace oxygen. That is, unnecessary elements may penetrate the TiO₂ particle.

Patent document 2 discloses a TiO₂ particle doped with a rare-earth element and a method of manufacturing the same using thermal plasma. According to the disclosure of patent literature 2, a precursor supplied to heat plasma is liquid containing an organic solvent to stabilize the precursor, i.e. a component unnecessary for original synthesis. If the precursor containing the unnecessary component and a reaction gas react in high-temperature heat plasma, the carbon element in the organic solvent is doped together with the rare-earth element with the result that it may not possible to obtain high purity TiO₂ particles. Also, since the precursor includes a complex containing a Ti element, nitrate containing a rare-earth element and an organic solvent to stabilize the complex, liquid components of the precursor do not chemically react. For this reason, a process of selecting and mixing optimal liquid components to prepare the precursor is complicated.

In a conventional art to supply liquid containing Ti as a starting material to plasma flame, the influence of unnecessary atoms (nitrogen, carbon and the like) contained in the liquid may not be neglected as the size of a created particle is decreased. Photocatalytic reaction occurs at the surface of the particle. For example, when unnecessary atoms are deposited at the surface of the particle, therefore, the occurrence of photocatalytic reaction is difficult. Meanwhile, Patent document 1 and Patent document 2 do not disclose whether the TiO₂ particle exhibits photocatalytic activity.

In addition, in a conventional art to supply liquid containing Ti as a starting material to plasma flame, the liquid containing Ti is evaporated in a plasma generation chamber with the result that a large amount of, for example, organic gas is generated. In particular, in a case in which a large amount of TiO₂ particles are manufactured, a large amount of liquid is necessary with the result that it is necessary to additionally connect an exhaust system to prevent evaporated gas from being discharged to the atmosphere to the chamber or the like. Consequently, the size of the manufacturing apparatus as compared with the conventional art increases.

Non-patent literature 1 discloses a method of synthesizing a TiO₂ ultra fine particle, i.e. a TiO₂ nano particle, using high frequency plasma. In non-patent literature 1, photocatalytic properties (hydrogen generation) under artificial solar light irradiation are disclosed; however, injection of a metal and/or a metal oxide into the TiO₂ nano particle is not disclosed.

### PRIOR ART

### Patent literature

Patent literature 1: Japanese Patent Kokai No. 2007-230809
Patent Literature 2: Japanese Patent Kokai No. 2006-347826

### Non-patent literature

Non-patent literature 1: Journal of the Japanese Institute of Metals volume 63, No. 1 (1994) 74 - 81

### DISCLOSURE OF THE INVENTION

### Problems to be Solved by the Invention

It is an object of the present invention to provide a TiO₂ nano particle exhibiting photocatalytic activity and injected with a metal, as a supplementary element to strongly activate a photocatalytic function of the TiO₂ nano particle, and/or a metal oxide MxOy (M is Ni, Cr, Pt, Rh, Ru, Cu, x = 1, 2, 3 ... and y = 0, 1, 2 ...). Means to Solve the Problems

A TiO₂ nano particle injected with a metal and/or a metal oxide MxOy (M is Ni, Cr, Pt, Rh, Ru, Cu, x = 1, 2, 3 ... and y = 0, 1, 2 ...) according to the present invention is created by a step of mixing Ti powder and metal powder M (M is Ni, Cr, Pt, Rh, Ru, Cu), a step of generating heat plasma, and a step of supplying a mixture of the titanium powder and the metal powder to the heat plasma using an inert gas as a carrier gas and supplying oxygen gas to the heat plasma.

The TiO₂ nano particle according to the present invention exhibits photocatalytic activity and is injected with a metal, as a supplementary element to activate a photocatalytic function of the TiO₂ nano particle, and/or a metal oxide MxOy (M is Ni, Cr, Pt, Rh, Ru, Cu, x = 1, 2, 3 - and y = 0, 1, 2 ...).

### Effects of the Invention

In the TiO₂ nano particle according to the present invention, photocatalytic activity (hydrogen generation) is improved.

### BRIEF DESCRIPTION OF THE DRAWINGS

FIG. 1 is a schematic view illustrating a high frequency plasma apparatus used in a first embodiment to a third embodiment of the present invention.
FIG. 2 is a graph illustrating a relationship between an inductively coupled plasma (ICP) quantity (Ni injection quantity) of a TiO₂ nano particle containing Ni and an Ni oxide manufactured using a manufacturing method according to a first embodiment of the present invention and a blending quantity of a starting Ni powder material.
FIG. 3 is a graph illustrating a ratio of an anatase phase to an Ni blending quantity of a TiO₂ nano particle containing Ni and an Ni oxide manufactured using the manufacturing method according to the first embodiment of the present invention.
FIG. 4 is a graph illustrating optical absorption properties of a TiO₂ nano particle containing Ni and an Ni oxide manufactured using the manufacturing method according to the first embodiment of the present invention.
FIG. 5 is a graph illustrating photocatalytic properties of a TiO₂ nano particle containing Ni and an Ni oxide manufactured using the manufacturing method according to the first embodiment of the present invention.
FIG. 6 is a graph illustrating a relationship between an ICP quantity (Cr injection quantity) of a TiO₂ nano particle containing Cr and a Cr oxide manufactured using a manufacturing method according to a second embodiment of the present invention and a blending quantity of a starting Cr powder material.
FIG. 7 is a graph illustrating a ratio of an anatase phase to a Cr blending quantity of a TiO₂ nano particle containing Cr and a Cr oxide manufactured using the manufacturing method according to the second embodiment of the present invention.
FIG. 8 is a graph illustrating photocatalytic properties of a TiO₂ nano particle containing Cr and a Cr oxide manufactured using the manufacturing method according to the second embodiment of the present invention.
FIG. 9 is a graph illustrating a ratio of an anatase phase to a Pt blending quantity of a TiO₂ nano particle containing Pt and a Pt oxide manufactured using the manufacturing method according to a third embodiment of the present invention.
FIG. 10 is a graph illustrating photocatalytic properties of a TiO₂ nano particle containing Pt and a Pt oxide manufactured using the manufacturing method according to the third embodiment of the present invention.

### MODE FOR CARRYING OUT THE INVENTION

The present invention provides a TiO₂ nano particle that resolves water through light irradiation to generate hydrogen wherein the TiO₂ nano particle is injected with a supplementary element to activate a photocatalytic function of the TiO₂ nano particle.

Such injection was carried out using a heat plasma method as shown in the following embodiments of the present invention.

The supplementary element is not particularly restricted. Preferably, the supplementary element includes a metal element, such as Ni, Cr, Pt, Cu, Rh or Ru, and/or an oxide thereof MxOy (M = metal element, x = an integer equal to or greater than 1, y = an integer equal to 0 or equal to or greater than 1).

Hereinafter, embodiments of the present invention will be described.
A TiO₂ nano particle injected with Ni and an Ni oxide and a manufacturing method thereof according to a first embodiment of the present invention, a TiO₂ nano particle injected with Cr and a Cr oxide and a manufacturing method thereof according to a second embodiment of the present invention, and a TiO₂ nano particle injected with Pt and a Pt oxide and a manufacturing method thereof according to a third embodiment of the present invention will be described with reference to the accompanying drawings.

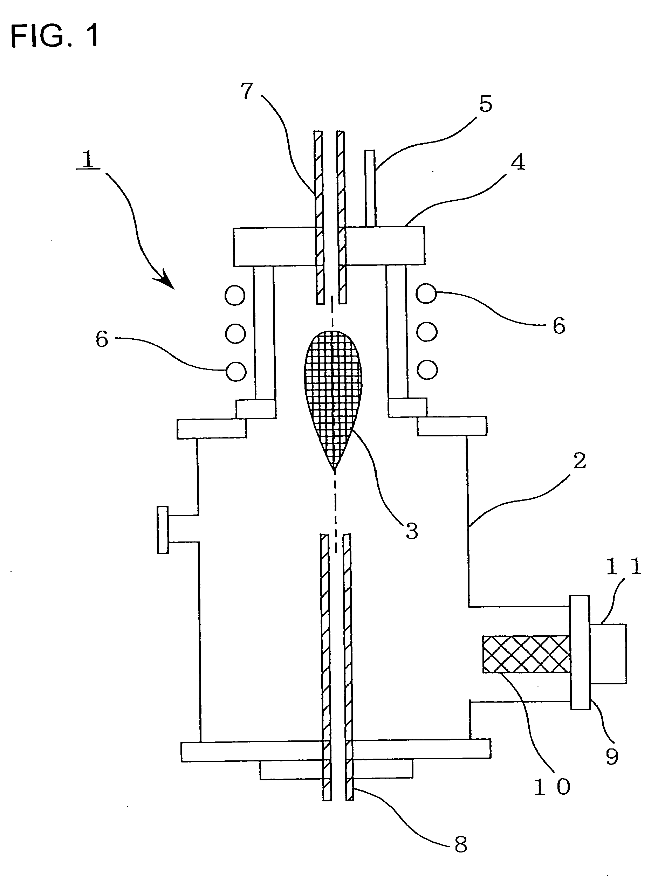

A high frequency plasma apparatus 1 used to carry out the manufacturing methods according to the first embodiment to the third embodiment of the present invention will be described with reference to FIG. 1. FIG. 1 is a schematic view illustrating a reaction chamber 2 of the high frequency plasma apparatus 1. A high frequency plasma torch 4 to generate heat plasma 3 in the reaction chamber 2 is mounted at the top of the reaction chamber 2. A plasma gas introduction part 5 to introduce plasma gas into the high frequency plasma torch is provided at the top of the high frequency plasma torch 4. A radio frequency (RF) coil 6 to plasmarize the plasma gas introduced into the high frequency plasma torch is provided at the outside of the high frequency plasma torch 4. A powder introduction nozzle 7 to introduce a compound raw material, in powder form, together with a carrier gas is mounted at the upper part of the high frequency plasma torch. A counter nozzle 8 to introduce a reaction gas along the central axis of the high frequency plasma torch is mounted at the lower part of the reaction chamber. A discharge port 9 to discharge the plasma gas, the reaction gas and the carrier gas, introduced into the reaction chamber, is mounted at the side of the lower part of the reaction chamber via a filter 10. Also, created particles are suctioned by a discharge pump connected to a discharge pipe 11 of the discharge port 9 and collected by the filter 10. Meanwhile, the high frequency plasma apparatus of FIG. 1 is illustrated as an example and the present invention is not limited to the illustrated high frequency plasma apparatus.

### FIRST EMBODIMENT

### A TiO₂ nano particle injected with Ni and an Ni oxide

A manufacturing method according to a first embodiment of the present invention includes (1) a step of mixing starting powder raw materials, (2) a step of generating heat plasma and (3) a step of supplying the starting powder raw material mixture to the heat plasma together with a reaction gas.

### (1) Powder mixing step

In this experiment, metal Ti powder having a purity of 99.9 % or more (particle size: 38 µm) and metal Ni powder having a purity of 99.9 % or more (particle size: 45 µm) were prepared as starting powder raw materials.

Powder mixture samples obtained by mixing the Ti powder and the Ni powder at predetermined ratios, i.e. sample 1 (Ni powder blending quantity 0.0 wt%), sample 2 (Ni powder blending quantity 0.2 wt%), sample 3 (Ni powder blending quantity 2 wt%), sample 4 (Ni powder blending quantity 5 wt%) and sample 5 (Ni powder blending quantity 10 wt%), were individually mixed using a ball mill for several hours so that the Ti powder and the Ni powder were uniformly distributed.

In a modified embodiment, on the other hand, the powder mixture may be dried, for example, at a temperature of 120°C for several hours so as to remove moisture contained in the powder mixture.

### (2) Plasma generating step

At the plasma generating step, heat plasma was generated by the high frequency plasma torch 4 shown in FIG. 1. In this experiment, plasma power was set to 5.5 kV and 3.4 A (19 kW).

### (3) Powder mixture supplying step

A supply quantity of the Ti and Ni powder mixture, mixed at the powder mixing step, from a raw material supply nozzle mounted at the upper part of the plasma torch was set to, for example, 0.2 to 4 g/min and the Ti and Ni powder mixture was supplied to the heat plasma generated at the predetermined power from the powder introduction nozzle 7 shown in FIG. 1 using Ar as a carrier gas. At the same time, the mixture of oxygen gas, a flow rate of which was set to, for example, 2 L/min, and Ar gas, a flow rate of which was set to, for example, 2 L/min, was ejected from the counter nozzle 8 of FIG. 1 below the generated heat plasma as a reaction gas.

A TiO₂ nano particle injected with Ni and an Ni oxide created as the result thereof was collected by the filter 10 provided at the front of the gas discharge port provided at the lower part of the reaction chamber 2.

Next, fundamental properties of a TiO₂ nano particle injected with Ni and an Ni oxide obtained using the above-described manufacturing method will be described. Also, photocatalytic properties of a TiO₂ nano particle injected with Ni and an Ni oxide will be described below.

The particle shape and element analysis was carried out with respect to a TiO₂ nano particle injected with Ni and an Ni oxide using an energy dispersive X-ray analysis apparatus (JED-2300T). It was confirmed based on an obtained STEM image (not shown) that the size of the created particle was 10 to 500 nm and the shape of the particle was approximately spherical. Also, it was confirmed that an Ni atom was not locally present in a portion of the TiO₂ nano particle, was not deposited only at the surface of the TiO₂ nano particle, and was present in the TiO₂ nano particle in a dispersed state.

A combined state of a Ti atom, an Ni atom and an oxygen atom was examined using X-ray photoemission spectroscopy (XPS). It was confirmed from an XPS spectral peak position of an inner core level that the Ti atom was combined with the oxygen to be present as TiO₂ and the Ni atom was present as Ni metal and, furthermore, was combined with the oxygen to be present as an Ni oxide. It was understood from these results that the nano particle manufactured using the above-described manufacturing method was present in a state in which Ni and the Ni oxide were dispersed in the TiO₂ nano particle. That is, it was confirmed that the nano particle was a solid solution.

The effects of the method of manufacturing the TiO₂ nano particle injected with Ni and the Ni oxide according to the first embodiment of the present invention will be described.

This manufacturing method includes the mixing step, the heat plasma generating step and the supplying step. At the mixing step, the Ti powder and the Ni powder are mixed without using, for example, liquid, such as an organic solvent, an oxidizing agent and a pH adjusting agent, unlike the conventional art. Consequently, it is possible to more simply prepare a mixture of the starting powder materials. Also, when the Ti and Ni powder mixture is supplied to the heat plasma, inert Ar gas is used as the carrier gas. As a result, unnecessary atoms (nitrogen, carbon and the like) contained in the organic solvent, the oxidizing agent and the pH adjusting agent, do not penetrate the TiO₂ nano particle unlike the conventional art. Consequently, it is possible to create a TiO₂ nano particle exhibiting a higher degree of purity. Also, liquid is not used as the starting raw material, and therefore, it is not necessary to additionally connect an exhaust system to prevent evaporated gas from being discharged to the atmosphere to the chamber or the like. Consequently, it is possible to reduce the size of the manufacturing apparatus as compared with the conventional art.

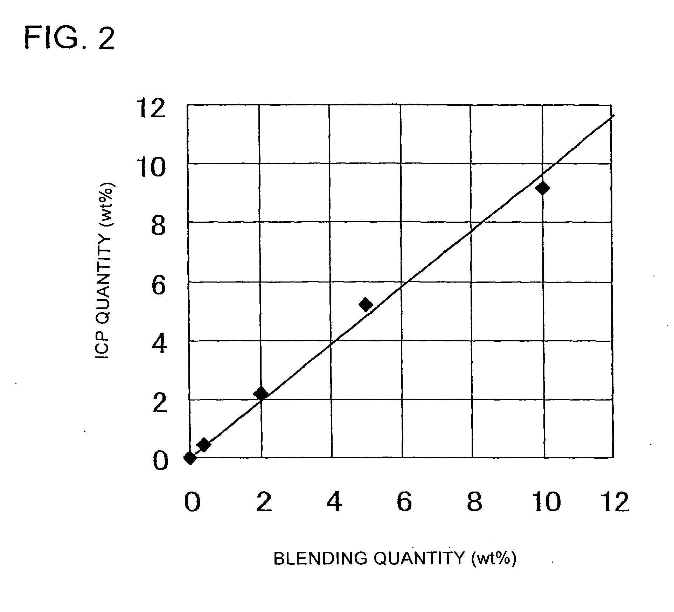

FIG. 2 is a graph, in which the horizontal axis indicates a function of a blending quantity (wt%) of Ni powder, which is a starting powder raw material, to Ti powder, which is a starting powder raw material, illustrating an inductively coupled plasma (ICP) quantity (wt%), i.e. an injection quantity (content), of Ni, contained in a created TiO₂ nano particle by injection, to Ti. The CIP quantity (injection quantity) of Ni, contained in the created nano particle by injection, to Ti was obtained by ICP mass analysis. When attention was focused on the inclination of the ICP quantity (injection quantity) to the blending quantity (wt%) as shown in FIG. 2, it was confirmed that as the added quantity of Ni was increased, the quantity of Ni contained in the nano particle by injection linearly increased. Furthermore, when attention was focused on the value of the ICP quantity (injection quantity) to the blending quantity (wt%), it was confirmed that the blending quantity of Ni, which was the starting powder raw material, and the injection quantity of Ni contained in the created nano particle were almost equal. This result shows that it is possible to arbitrarily control the composition of a particle to be created so that the particle can be created with high reproducibility.

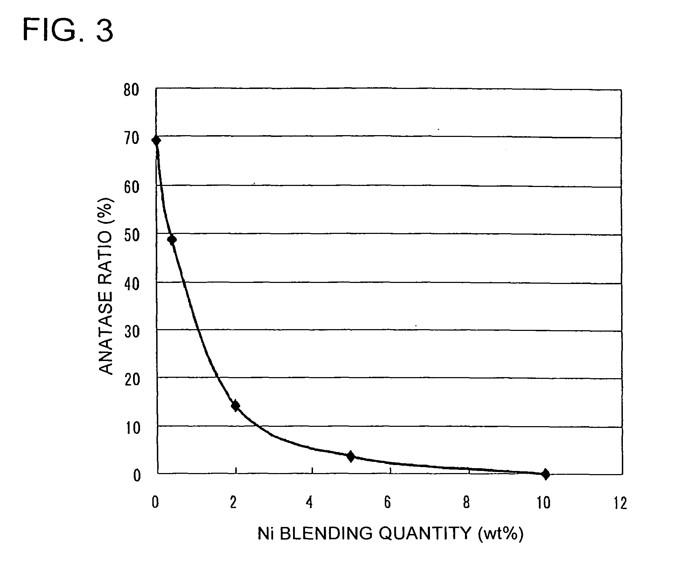

FIG. 3 is a graph illustrating an anatase composition ratio of a TiO₂ component of a created nano particle as a function of a blending quantity (wt%) of Ni powder, which is a starting powder raw material. An anatase phase ratio was decided based on peak intensity distribution of X-ray diffraction (XRD). It can be seen from FIG. 3 that as the blending quantity of Ni, which is the starting raw material, is decreased, the anatase phase ratio decreases. This result shows that it is possible to control crystallinity of a TiO₂ component of a nano particle.

Next, the properties of a TiO₂ nano particle injected with Ni and an Ni oxide created using the high frequency plasma manufacturing method as a photocatalyst will be described.

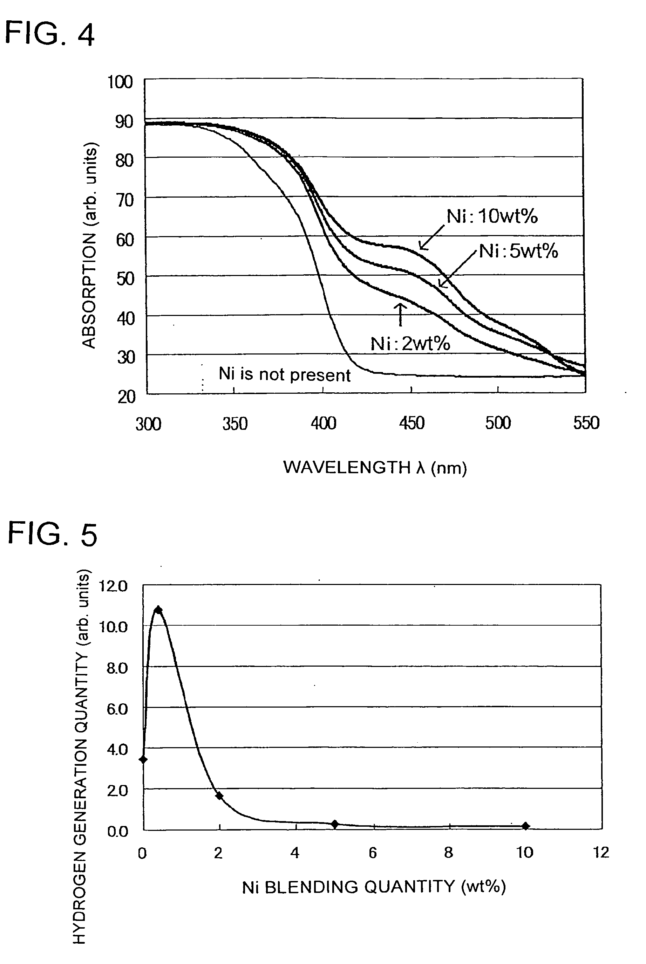

FIG. 4 is a view illustrating optical absorption properties of samples 1, 3, 4 and 5. It was confirmed that, from a near ultraviolet zone to a visible zone (wavelength: 330 nm to 550 nm), absorption intensity increased as the quantity of Ni added was increased as compared with TiO₂ to which Ni was not added. It is considered that the level caused by Ni as the result of addition of Ni was formed in a band gap of TiO₂. Since the band gap of the TiO₂ nano particle injected with Ni and the Ni oxide is narrower than that of a TiO₂ nano particle to which Ni is not added, it is considered that the absorption intensity increased from the near ultraviolet zone to the visible zone (wavelength: 330 nm to 550 nm).

FIG. 5 is a view illustrating a photocatalytic action of a TiO₂ nano particle injected with Ni and an Ni oxide. The horizontal axis indicates an Ni blending quantity and the vertical axis indicates a hydrogen generation quantity. FIG. 5 shows a hydrogen generation quantity when a TiO₂ nano particle injected with Ni and an Ni oxide is suspended in a methanol-water solution as a sacrificial agent and is irradiated by a xenon lamp. In particular, in a case in which an Ni blending quantity was about 0.2 wt%, as shown in FIG. 5, the hydrogen generation quantity was about four times that of a TiO₂ nano particle to which Ni was not added. This result shows that a TiO₂ nano particle having an Ni blending quantity of about 0.2 wt% exhibits an ability to reduce proton into hydrogen as compared with a TiO₂ nano particle with which Ni is not blended.

The above is indicated in Table 1.

**[Table 1]**

| Sample No. | | 1 | 2 | 3 | 4 | 5 |
|---|---|---|---|---|---|---|
| Ni powder blending quantity (wt%) | | 0.0 | 0.4 | 2 | 5 | 10 |
| Average supply speed | Powder mixture (g/min) | 1 | 0.6 | 0.9 | 0.7 | 0.3 |
| | Reaction gas (L/min) | 2 | 2 | 2 | 2 | 2 |
| TiO₂ nano particle | ICP (wt%) | 0 | 0.4 | 2.2 | 5.2 | 9.2 |
| | Hydrogen generation quantity (umol/h) | 3.5 | 10.7 | 1.6 | 0.2 | 0.1 |
| | Anatase ratio (%) | 69 | 49 | 14 | 4 | 0 |

### SECOND EMBODIMENT

### A TiO₂ nano particle injected with Cr and a Cr oxide

In the same manner as the first embodiment of the present invention, a manufacturing method according to a second embodiment of the present invention includes (1) a step of mixing starting powder raw materials, (2) a step of generating heat plasma and (3) a step of supplying the starting powder raw material mixture to the heat plasma together with a reaction gas.

### (1) Powder mixing step

In this experiment, metal Ti powder having a purity of 99.9 % or more (particle size: 38 µm) and metal Cr powder having a purity of 99.9 % or more (particle size: 63 µm) were prepared as starting powder raw materials.

Powder mixture samples obtained by mixing the Ti powder and the Cr powder at predetermined ratios, i.e. sample 1 (Cr powder blending quantity 0.0 wt%), sample 2 (Cr powder blending quantity 0.4 wt%), sample 3 (Cr powder blending quantity 0.8 wt%), sample 4 (Cr powder blending quantity 2 wt%) and sample 5 (Cr powder blending quantity 5 wt%), were individually mixed using a ball mill for several hours so that the Ti powder and the Cr powder were uniformly distributed.

In a modified embodiment, on the other hand, the powder mixture may be dried, for example, at a temperature of 120 °C for several hours so as to remove moisture contained in the powder mixture.

### (2) Plasma generating step

At the plasma generating step, heat plasma was generated by the high frequency plasma torch 4 shown in FIG. 1. In this experiment, plasma power was set to 5.5 kV and 3.4 A (19 kW).

### (3) Powder mixture supplying step

A supply quantity of the Ti and Cr powder mixture, mixed at the powder mixing step, from a raw material supply nozzle mounted at the upper part of the plasma torch was set to, for example, 0.2 to 4 g/min and the Ti and Ni powder mixture was supplied to the heat plasma generated at the predetermined power from the powder introduction nozzle 7 shown in FIG. 1 using Ar as a carrier gas. At the same time, the mixture of oxygen gas, a flow rate of which was set to, for example, 2 L/min, and Ar gas, a flow rate of which was set to, for example, 2 L/min, was ejected from the counter nozzle 8 of FIG. 1 below the generated heat plasma as a reaction gas.

A TiO₂ nano particle injected with Cr and a Cr oxide created as the result thereof was collected by the filter 10 provided at the front of the gas discharge port provided at the lower part of the reaction chamber 2.

Next, fundamental properties of a TiO₂ nano particle injected with Cr and a Cr oxide obtained using the above-described manufacturing method will be described. Also, photocatalytic properties of a TiO₂ nano particle injected with Cr and a Cr oxide will be described below.

The particle shape and element analysis was carried out with respect to a TiO₂ nano particle injected with Cr and a Cr oxide using an energy dispersive X-ray analysis apparatus (JED-2300T). It was confirmed basted on an obtained STEM image (not shown) that the size of the created particle was 10 to 500 nm and the shape of the particle was approximately spherical. Also, in the same manner as Ni, it was confirmed that a Cr atom was not locally present in a portion of the TiO₂ nano particle, was not distributed only at the surface of the TiO₂ nano particle, and was present in the TiO₂ nano particle in a dispersed state.

A combined state of a Ti atom, a Cr atom and an oxygen atom was examined using XPS. It was confirmed from an XPS spectral peak position of an inner core level that the Ti atom was combined with the oxygen to be present as TiO₂ and the Cr atom was present as Cr metal and, furthermore, was combined with the oxygen to be present as a Cr oxide. It was understood from these results that the nano particle manufactured using the above-described manufacturing method was present in a state in which Cr and the Cr oxide were dispersed in the TiO₂ nano particle. That is, it was confirmed that the TiO₂ nano particle was injected with the Cr element.

The effects of the method of manufacturing the TiO₂ nano particle injected with Cr and the Cr oxide according to the second embodiment of the present invention will be described.

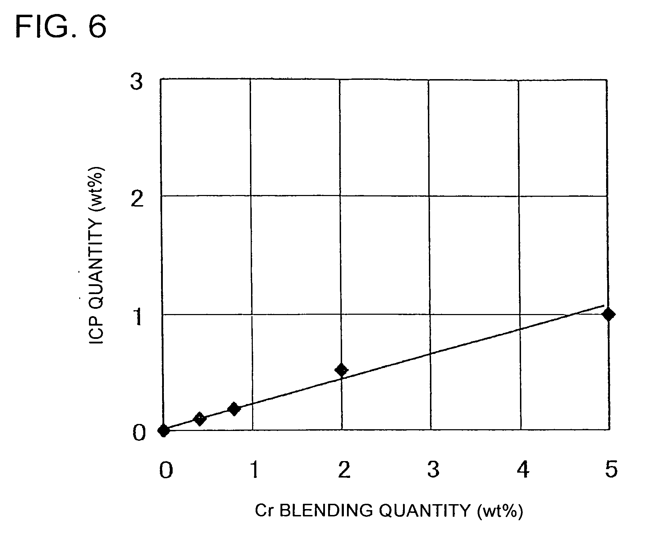

FIG. 6 is a graph, in which the horizontal axis indicates a function of a blending quantity (wt%) of Cr powder, which is a starting powder raw material, to Ti powder, which is a starting powder raw material, illustrating an ICP quantity (wt%), i.e. an injection quantity, of Cr, contained in a created TiO₂ nano particle by injection, to Ti. The CIP quantity (injection quantity) of Cr, contained in the created nano particle by injection, to Ti was obtained by ICP mass analysis. When attention was focused on the inclination of the ICP quantity (injection quantity) to the blending quantity (wt%) as shown in FIG. 6, it was confirmed that as the quantity of Cr added was increased, the quantity of Cr contained in the nano particle by injection linearly increased. This result shows that it is possible to arbitrarily control the composition of a particle to be created so that the particle can be created with high reproducibility based on the inclination of the ICP quantity (injection quantity) to the blending quantity (wt%) shown in FIG. 6.

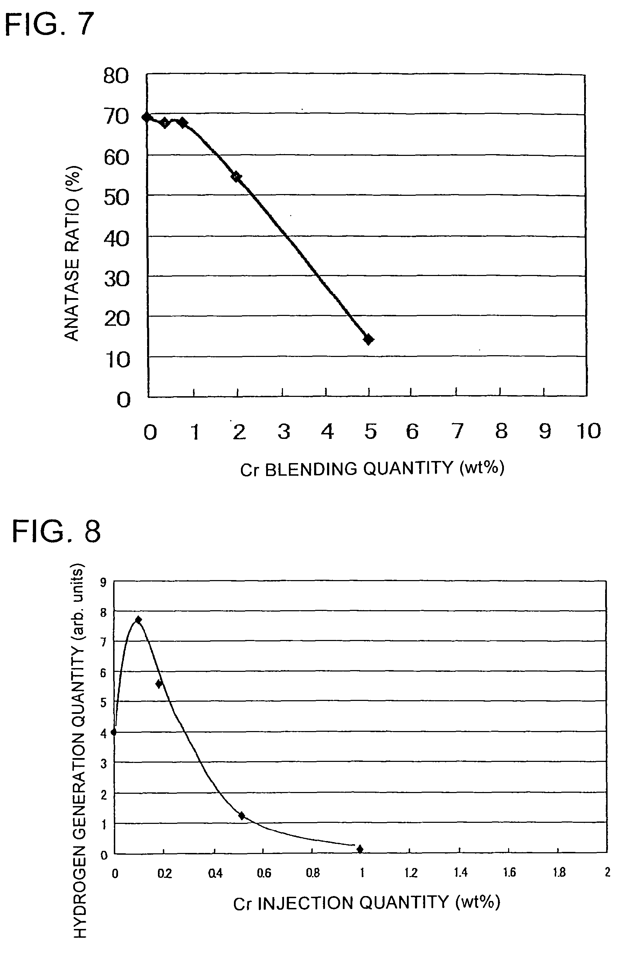

FIG. 7 is a graph illustrating an anatase composition ratio of a TiO₂ component of a created nano particle as a function of a blending quantity (wt%) of Cr powder, which is a starting powder raw material, to Ti powder, which is a starting powder raw material. An anatase phase ratio was decided based on peak intensity distribution of XRD. It can be seen from FIG. 7 that as the blending quantity of Cr, which is the starting raw material, is decreased, the anatase phase ratio decreases. This result shows that it is possible to control crystallinity of a TiO₂ component of a nano particle.

Next, the properties of a TiO₂ nano particle injected with Cr and a Cr oxide created using the high frequency plasma manufacturing method as a photocatalyst will be described.

FIG. 8 is a view illustrating a photocatalytic action of a TiO₂ nano particle injected with Cr and a Cr oxide. The horizontal axis indicates an injection quantity (wt%) of Cr contained in the TiO₂ nano particle by injection and the vertical axis indicates hydrogen generation quantity. FIG. 8 shows hydrogen generation quantity when a TiO₂ nano particle injected with Cr and a Cr oxide is suspended in a methanol-water solution as a sacrificial agent and is irradiated by a xenon lamp. In particular, in a case in which a Cr injection quantity was about 0.1 wt%, as shown in FIG. 8, the hydrogen generation quantity was about twice that of a TiO₂ nano particle with which Cr was not mixed. This result shows that a TiO₂ nano particle having a Cr injection quantity of about 0.1 wt% exhibits an ability to reduce proton into hydrogen as compared with a TiO₂ nano particle with which Cr is not blended.

The above is indicated in Table 2.

**[Table 2]**

| Sample No. | | 1 | 2 | 3 | 4 | 5 |
|---|---|---|---|---|---|---|
| Cr powder blending quantity (wt%) | | 0.0 | 0.4 | 0.8 | 2 | 5 |
| Average supply speed | Powder mixture (g/min) | 1 | 0.4 | 0.3 | 0.3 | 0.2 |
| | Reaction gas (L/min) | 2 | 2 | 2 | 2 | 2 |
| TiO₂ nano particle | ICP (wt%) | 0 | 0.10 | 0.18 | 0.51 | 1.00 |
| | Hydrogen generation quantity (umol/h) | 4.0 | 7.7 | 5.6 | 1.2 | 0.1 |
| | Anatase ratio (%) | 69 | 68 | 68 | 55 | 14 |

### THIRD EMBODIMENT

### A TiO₂ nano particle injected with Pt and a Pt oxide

In the same manner as the first and second embodiments of the present invention, a manufacturing method according to a third embodiment of the present invention includes (1) a step of mixing starting powder raw materials, (2) a step of generating heat plasma and (3) a step of supplying the starting powder raw material mixture to the heat plasma together with a reaction gas.

### (1) Powder mixing step

In this experiment, metal Ti powder having a purity of 99.9 % or more (particle size: 38 µm) and platinum black powder having a purity of 97.8 % or more (particle size: 5 µm) were prepared as starting powder raw materials.

Powder mixture samples obtained by mixing the Ti powder and the Pt powder at predetermined ratios, i.e. sample 1 (Pt powder blending quantity 0.0 wt%), sample 2 (Pt powder blending quantity 0.2 wt%), sample 3 (Pt powder blending quantity 0.8 wt%) and sample 4 (Pt powder blending quantity 1.5 wt%) were individually mixed using a ball mill for several hours so that the Ti powder and the Pt powder were uniformly distributed.

In a modified embodiment, on the other hand, the powder mixture may be dried, for example, at a temperature of 120 °C for several hours so as to remove moisture contained in the powder mixture.

### (2) Plasma generating step

At the plasma generating step, heat plasma was generated by the high frequency plasma torch 4 shown in FIG. 1. In this experiment, plasma power was set to 5.5 kV and 3.4 A (19 kW).

### (3) Powder mixture supplying step

A supply quantity of the Ti and Pt powder mixture, mixed at the powder mixing step, from a raw material supply nozzle mounted at the upper part of the plasma torch was set to, for example, 0.2 to 4 g/min and the Ti and Pt powder mixture was supplied to the heat plasma generated at the predetermined power from the powder introduction nozzle 7 shown in FIG. 1 using Ar as a carrier gas. At the same time, the mixture of oxygen gas, a flow rate of which was set to, for example, 2 L/min, and Ar gas, a flow rate of which was set to, for example, 2 L/min, was ejected from the counter nozzle 8 of FIG. 1 below the generated heat plasma as a reaction gas.

A TiO₂ nano particle injected with Pt and a Pt oxide created as the result thereof was collected by the filter 10 provided at the front of the gas discharge port provided at the lower part of the reaction chamber 2.

Next, fundamental properties of a TiO₂ nano particle injected with Pt and a Pt oxide obtained using the above-described manufacturing method will be described. Also, photocatalytic properties of a TiO₂ nano particle injected with Pt and a Pt oxide will be described below.

The particle shape and element analysis was carried out with respect to a TiO₂ nano particle injected with Pt and a Pt oxide using an energy dispersive X-ray analysis apparatus (JED-2300T). It was confirmed based on an obtained STEM image (not shown) that the size of the created particle was 10 to 500 nm and the shape of the particle was approximately spherical. Also, in the same manner as Ni and Cr, it was confirmed that a Pt atom was not locally present in a portion of the TiO₂ nano particle, was not distributed only at the surface of the TiO₂ nano particle, and was present in the TiO₂ nano particle in a dispersed state.

A combined state of a Ti atom, a Pt atom and an oxygen atom was examined using XPS. It was confirmed from an XPS spectral peak position of an inner core level that the Ti atom was combined with the oxygen to be present as TiO₂ and the Pt atom was present as a Pt metal and, furthermore, was combined with the oxygen to be present as a Pt oxide. It was understood from these results that the nano particle manufactured using the above-described manufacturing method was present in a state in which Pt or the Pt oxide was dispersed in the TiO₂ nano particle. That is, it was confirmed that the TiO₂ nano particle was injected with the Pt element.

The effects of the method of manufacturing the TiO₂ nano particle injected with Pt and the Pt oxide according to the third embodiment of the present invention will be described.

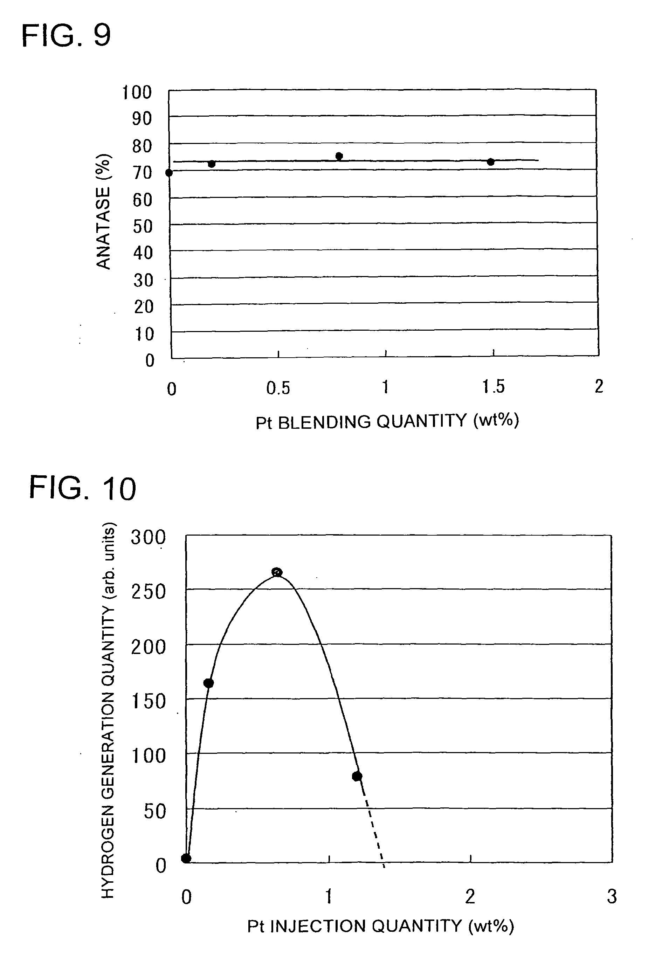

FIG. 9 is a graph illustrating an anatase composition ratio of a TiO₂ component of a created nano particle as a function of a blending quantity (wt%) of Pt powder, which is a starting powder raw material, to Ti powder, which is a starting powder raw material. An anatase phase ratio was decided based on peak intensity distribution of XRD. It can be seen from FIG. 9 that when the blending quantity (wt%) of Pt, which is the starting raw material, is increased, the anatase phase ratio is almost uniformly maintained, which is definitely different from the properties of FIG. 3 (first embodiment) and FIG. 7 (second embodiment).

That is, the result of FIG. 9 means that the mixing of Pt does not have an influence on crystallinity of a TiO₂ component of a nano particle.

Next, the properties of a TiO₂ nano particle injected with Pt and a Pt oxide manufactured using the manufacturing method according to the third embodiment as a photocatalyst will be described.

FIG. 10 is a view illustrating a photocatalytic action of a TiO₂ nano particle injected with Pt and a Pt oxide. The horizontal axis indicates an injection quantity (wt%) of Pt, which is a starting powder raw material, and the vertical axis indicates a hydrogen generation quantity. FIG. 10 shows a hydrogen generation quantity when a TiO₂ nano particle injected with Pt and a Pt oxide is suspended in a methanol-water solution as a sacrificial agent and is irradiated by a xenon lamp. In particular, in a case in which a Pt injection quantity was about 0.6 wt%, as shown in FIG. 10, the hydrogen generation quantity was about 70 times that of a TiO₂ nano particle with which Pt was not mixed. This result shows that a TiO₂ nano particle having a Pt blending quantity of about 0.6 wt% exhibits an ability to reduce proton into hydrogen as compared with a TiO₂ nano particle with which Pt is not blended.

The above is indicated in Table 3.

**[Table 3]**

| Sample No. | | 1 | 2 | 3 | 4 |
|---|---|---|---|---|---|
| Pt powder blending quantity (wt%) | | 0.0 | 0.2 | 0.8 | 1.5 |
| Average supply speed | Powder mixture (g/min) | 1 | 1.5 | 1.2 | 1.4 |
| | Reaction gas (L/min) | 2 | 2 | 2 | 2 |
| TiO₂ nano particle | Hydrogen generation quantity (umol/h) | 4 | 163 | 265 | 79 |
| | Anatase ratio (%) | 69 | 72 | 75 | 73 |

The TiO₂ nano particle according to the present invention was described according to the first to third embodiments; however, the present invention is not limited to these embodiments without departing from the scope of the invention. Hereinafter, modifications of the first to third embodiments will be described.

1. Particle sizes of the starting powder raw materials are not limited to the first to third embodiments. Particle sizes of the starting powder raw materials may be changed.

2. An unnecessary gas (for example, nitrogen) contained in air may be removed using a vacuum pump connected to the discharge port 9 from the reaction chamber 2 shown in FIG. 1 and may be replaced by for example, an inert gas, such as Ar. Consequently, it is possible to manufacture a TiO₂ nano particle injected with a metal or a metal oxide exhibiting a higher degree of purity.

3. In each of the first to third embodiments, the methods of manufacturing TiO₂ nano particles injected with Ni and the Ni oxide, Cr and the Cr oxide or Pt and the Pt oxide were described. In addition, the present invention may be applied to methods of manufacturing TiO₂ nano particles injected with other supplementary elements (for example, Rh, Ru, Cu and the like) and oxides thereof. In this case, at the powder mixing step, supplementary element powder as a starting powder raw material may be mixed with Ti powder.

4. In each of the first to third embodiments, only one supplementary element is mixed with Ti powder. Alternatively, a plurality of supplementary elements may be mixed with the Ti powder.

## Claims

1. A TiO₂ nano particle, as a photocatalyst, which resolves water through light irradiation to generate hydrogen, wherein
the TiO₂ nano particle is injected with a supplementary element to strongly activate a catalyst function of the TiO₂ nano particle.

2. The TiO₂ nano particle according to claim 1,
wherein
the supplementary element comprises a metal M (M is Ni, Cr, Pt, Rh, Ru, Cu),
the TiO₂ nano particle is injected with the metal and/or a metal oxide MxOy (M is Ni, Cr, Pt, Rh, Ru, Cu, x = 1, 2, 3 ... and y = 0, 1, 2 ...), and
an injection quantity of the metal and/or the metal oxide to Ti of the TiO₂ nano particle is 1.8 wt% or less.

3. The TiO₂ nano particle according to claim 1,
wherein
the supplementary element comprises Ni, and
an injection quantity of Ni to Ti of the TiO₂ nano particle is 0.03 to 1.8 wt%.

4. The TiO₂ nano particle according to claim 3,
wherein the TiO₂ nano particle has an anatase phase of 20 to 70 %.

5. The TiO₂ nano particle according to claim 1,
wherein
the supplementary element comprises Cr, and
an injection quantity of Cr to Ti of the TiO₂ nano particle is 0.03 to 0.3 wt%.

6. The TiO₂ nano particle according to claim 5,
wherein the TiO₂ nano particle has an anatase phase of 65 to 70 %.

7. The TiO₂ nano particle according to claim 1,
wherein
the supplementary element comprises Pt, and
an injection quantity of Pt to Ti of the TiO₂ nano particle is 0.03 to 1.4 wt%.

8. The TiO₂ nano particle according to claim 7,
wherein the TiO₂ nano particle has an anatase phase of 65 to 77 %.

9. The TiO₂ nano particle according to claim 1,
wherein the TiO₂ nano particle is formed in a spherical shape and has a diameter of 10 to 500 nm.

10. A TiO₂ nano particle manufactured by
a step of mixing Ti powder and metal powder M (M is Ni, Cr, Pt, Rh, Ru, Cu),
a step of generating heat plasma, and
a step of supplying oxygen gas and a mixture of the Ti powder and the metal powder to the thermal plasma, wherein
the TiO₂ nano particle is injected with a metal and/or a metal oxide MxOy (M is Ni, Cr, Pt, Rh, Ru, Cu, x = 1, 2, 3 ... and y = 0, 1, 2 ...).
